# EUROPÄISCHE PATENTANMELDUNG

(11) **EP 1 269 843 A1**
(43) Veröffentlichungstag der Anmeldung: **02.01.2003**
(21) Anmeldenummer: 02010546.6
(22) Anmeldetag: 10.05.2002
(51) Int. Cl.: A01N 25/16, A01N 33/08

(54) **Antimikrobielle Polymerschäume mit Aminoalkoholen**

(30) Priorität: 29.06.2001 DE 10131484
(71) Anmelder: Creavis Gesellschaft für Technologie und Innovation mbH, 45772 Marl (DE)
(72) Erfinder: Ottersbach, Peter, Dr., 51570 Windeck (DE); Inhester, Martina, 45699 Herten (DE)

(57) **Zusammenfassung**

Die Erfindung betrifft antimikrobielle Schaumstoffe, die ein oder mehrere geschäumte Polymere sowie mindestens einen Aminoalkohol der Formel I 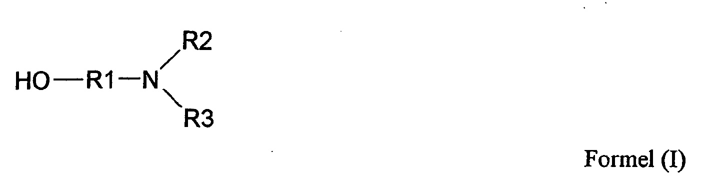 mit
- R1 =: verzweigter oder unverzweigter aliphatischer oder aromatischer Kohlenwasserstoffrest mit 1 bis 15 Kohlenstoffatomen.
- R2 =: H, verzweigter oder unverzweigter aliphatischer oder aromatischer Kohlenwasserstoffrest mit 1 bis 15 Kohlenstoffatomen.
- R3 =: H, verzweigter oder unverzweigter aliphatischer oder aromatischer Kohlenwasserstoffrest mit 1 bis 15 Kohlenstoffatomen
enthalten.

Verfahren zu deren Herstellung und deren Verwendung.

## Beschreibung

Die Erfindung betrifft die Verwendung von Aminoalkoholen zur mikrobiziden Imprägnierung von geschäumten Substraten.

Besiedlungen und Ausbreitungen von Bakterien auf Oberflächen von Rohrleitungen, Behältern oder Verpackungen sind im hohen Maße unerwünscht. Es bilden sich häufig Schleimschichten, die Mikrobenpopulationen extrem ansteigen lassen, die Wasser-, Getränke- und Lebensmittelqualitäten nachhaltig beeinträchtigen und sogar zum Verderben der Ware sowie zur gesundheitlichen Schädigung der Verbraucher führen können.

Aus allen Lebensbereichen, in denen Hygiene von Bedeutung ist, sind Bakterien fernzuhalten. Davon betroffen sind Textilien für den direkten Körperkontakt, insbesondere für den Intimbereich und für die Kranken- und Altenpflege. Außerdem sind Bakterien fernzuhalten von Möbel- und Geräteoberflächen in Pflegestationen, insbesondere im Bereich der Intensivpflege und der Kleinstkinder-Pflege, in Krankenhäusern, insbesondere in Räumen für medizinische Eingriffe und in Isolierstationen für kritische Infektionsfälle sowie in Toiletten.

Gegenwärtig werden Geräte, Oberflächen von Möbeln und Textilien gegen Bakterien im Bedarfsfall oder auch vorsorglich mit Chemikalien oder deren Lösungen sowie Mischungen behandelt, die als Desinfektionsmittel mehr oder weniger breit und massiv antimikrobiell wirken. Solche chemischen Mittel wirken unspezifisch, sind häufig selbst toxisch oder reizend oder bilden gesundheitlich bedenkliche Abbauprodukte. Häufig zeigen sich auch Unverträglichkeiten bei entsprechend sensibilisierten Personen.

Eine weitere Vorgehensweise gegen oberflächige Bakterienausbreitungen stellt die Einarbeitung antimikrobiell wirkender Substanzen in eine Matrix dar.

Daneben stellt auch die Vermeidung von Algenbewuchs auf Oberflächen eine immer bedeutsamere Herausforderung dar, da inzwischen viele Aussenflächen von Gebäuden mit Kunststoffverkleidungen ausgestattet sind, die besonders leicht veralgen. Neben dem unerwünschten optischen Eindruck kann unter Umständen auch die Funktion entsprechender Bauteile vermindert werden. In diesem Zusammenhang ist z.B. an eine Veralgung von photovoltaisch funktionalen Flächen zu denken.

Eine weitere Form der mikrobiellen Verunreinigung, für die es bis heute ebenfalls keine technisch zufriedenstellende Lösung gibt, ist der Befall von Oberflächen mit Pilzen. So stellt z.B. der Befall von Fugen und Wänden in Feuchträumen mit Aspergillus niger neben dem beeinträchtigten optischen auch einen ernstzunehmenden gesundheitsrelevanten Aspekt dar, da viele Menschen auf die von den Pilzen abgegebenen Stoffe allergisch reagieren, was bis hin zu schweren chronischen Atemwegserkrankungen führen kann.

Daneben werden viele Außenflächen mit Dämmstoffen ausgestattet. Bei diesen Dämmstoffen handelt es sich im Allgemeinen um Schaumstoffe. Schaumstoffe sind aufgrund ihrer sehr großen Oberfläche mikrobiologischen Angriffen in besonders starker Weise ausgeliefert. Als Polstermaterialien, z.B. in Autositzen oder auch Polstern im häuslichen Bereich, wie z.B. Matrazen und Sesseln, spielen Schaumstoffe ebenfalls eine große Rolle. Auch in diesem Umfeld ist man an einer mikrobiziden Ausstattung ohne Nebenwirkungen, die von niedermolekularen Bioziden ausgehen können, hochgradig interessiert.

Im Bereich der Seefahrt ist das Fouling der Schiffsrümpfe eine ökonomisch relevante Einflußgröße, da mit dem Bewuchs verbundenen erhöhten Strömungswiderstand der Schiffe ein deutlicher Mehrverbrauch an Kraftstoff verbunden ist. Bis heute begegnet man solchen Problemen allgemein mit der Einarbeitung giftiger Schwermetalle oder anderer niedermolekularer Biozide in Antifoulingbeschichtungen, um die beschriebenen Probleme abzumildern. Zu diesem Zweck nimmt man die schädlichen Nebenwirkungen solcher Beschichtungen in Kauf, was sich aber angesichts der gestiegenen ökologischen Sensibilität der Gesellschaft als zunehmend problematisch herausstellt.

So offenbart z. B. die US-PS 4 532 269 ein Terpolymer aus Butylmethacrylat, Tributylzinnmethacrylat und tert.-Butylaminoethylmethacrylat. Dieses Copolymer wird als antimikrobieller Schiffsanstrich verwendet, wobei das hydrophile tert.-Butylaminoethylmethacrylat die langsame Erosion des Polymers fördert und so das hochtoxische Tributylzinnmethacrylat als antimikrobiellen Wirkstoff freisetzt.

In diesen Anwendungen ist das mit Aminomethacrylaten hergestellte Copolymer nur Matrix oder Trägersubstanz für zugesetzte mikrobizide Wirkstoffe, die aus dem Trägerstoff diffundieren oder migrieren können. Polymere dieser Art verlieren mehr oder weniger schnell ihre Wirkung, wenn an der Oberfläche die notwendige "minimale inhibitorische Konzentration" (MIK) nicht mehr erreicht wird.

Aus der europäischen Patentanmeldung 0 862 858 ist weiterhin bekannt, dass Copolymere von tert.-Butylaminoethylmethacrylat, einem Methacrylsäureester mit sekundärer Aminofunktion, inhärent mikrobizide Eigenschaften besitzen.

Dieses Terpolymer weist ohne Zusatz eines mikrobiziden Wirkstoffs eine sogenannte Kontaktmikrobizidität auf. Es sind aus den folgenden Patentanmeldungen eine große Anzahl Kontaktmikrobizider Polymere bekannt: DE 100 24 270, DE 100 22 406, PCT/EP00/06501, DE 100 14 726, DE 100 08 177, PCT/EP00/06812, PCT/EP00/06487, PCT/EP00/06506, PCT/EP00/02813, PCT/EP00/02819, PCT/EP00/02818, PCT/EP00/02780, PCT/EP00/02781, PCT/EP00/02783, PCT/EP00/02782, PCT/EP00/02799, PCT/EP00/02798, PCT/EP00/00545, PCT/EP00/00544.

Diese Polymere enthalten keine niedermolekularen Bestandteile; die antimikrobiellen Eigenschaften sind auf den Kontakt von Bakterien mit der Oberfläche zurückzuführen.

Besonders geschäumte Substrate, wie z.B. Schaumstoffe, sind aufgrund ihrer im Allgemeinen porösen Struktur gepaart mit einer großen Oberfläche besonders anfällig gegenüber mikrobiologischen Angriffen. Dies kann, z.B. bei Anwesenheit von Feuchtigkeit, bis hin zur kompletten Verkeimung des Substrates führen, was sich gerade bei Erzeugnissen, denen wir täglich mehrere Stunden ausgesetzt sind, wie z.B. Matratzen, verheerend auswirkt.

Aber auch ein partieller Befall derartiger Substrate mit Mikroben kann sich nachteilig auswirken. So basieren z. B. viele Filtersysteme auf derartigen geschäumten Substraten, die im Zuge eines Befalls mit Schimmelpilzen als wahre Brutstätten für Mikroben fungieren können. Solchermaßen verunreinigte Systeme, z.B. innerhalb von Pollenfiltern als Bestandteil von Luftreinigungsmodulen, können giftige Toxine und Sporen über einen langen Zeitraum hinweg in hohen Dosen freisetzten. Dies ist gerade bei der zunehmenden Verbreitung solcher Systeme im Automobil-, aber gleichermaßen auch im stationären Bereich, von wachsender Brisanz, und kann bei empfindlichen oder gesundheitlich vorgeschädigten Personen zu gefährlichen Allergien und schweren Erkrankungen führen.

Geschäumte Substrate neigen aufgrund ihrer großen Oberfläche zu einem raschen antimikrobiellen Befall.

Um unerwünschten Anpassungsvorgängen der mikrobiellen Lebensformen, gerade auch in Anbetracht der aus der Antibiotikaforschung bekannten Resistenzentwicklungen von Keimen, wirksam entgegenzutreten, müssen auch zukünftig Systeme auf Basis neuartiger Zusammensetzungen und verbesserter Wirksamkeit entwickelt werden. Daneben spielen anwendungstechnische und ökonomische Fragestellungen eine ebenso bedeutende Rolle, da einerseits die antimikrobiellen Polymere oftmals mit anderen Kunststoffen zusammen verarbeitet werden, um deren Resistenz gegenüber mikrobiologischen Angriffen zu stärken bzw. diese im Idealfall gänzlich zu inertisieren, andererseits die Kosten zur antimikrobiellen Ausrüstung von Oberflächen noch wettbewerbsfähig sein müssen.

Aus DE 101 05 230.3 ist bekannt, polymere Substrate wie Polyamide oder Polyacrylate mit Aminoalkoholen zu belegen. Hierdurch wird eine antimikrobielle Oberfläche erzeugt.

Überraschenderweise wurde gefunden, dass Aminoalkohole auch zur antimikrobiellen Ausrüstung von geschäumten Substraten geeignet sind.

Gegenstand der vorliegenden Erfindung sind daher antimikrobielle Schaumstoffe, die ein oder mehrere geschäumte Polymere sowie mindestens einen Aminoalkohol der Formel I 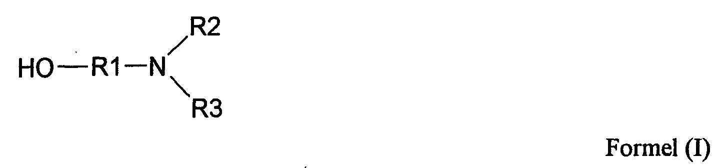 mit
R1 = verzweigter oder unverzweigter aliphatischer oder aromatischer Kohlenwasserstoffrest mit 1 bis 15 Kohlenstoffatomen.
R2 = H, verzweigter oder unverzweigter aliphatischer oder aromatischer Kohlenwasserstoffrest mit 1 bis 15 Kohlenstoffatomen.
R3 = H, verzweigter oder unverzweigter aliphatischer oder aromatischer Kohlenwasserstoffrest mit 1 bis 15 Kohlenstoffatomen
enthalten.

Das erfindungsgemäße Produkt ist ein ohne Zusatz niedermolekularer Biozide antimikrobiell ausgerüstetes geschäumtes Substrat.

Da die Wirkung der beschriebenen antimikrobiellen Polymere auf den Kontakt von Mikroorganismen mit der Oberfläche zurückzuführen sind, schlägt sich überraschenderweise die große aktiv verfügbare Oberfläche, wie sie den beschriebenen Substraten im Allgemeinen innewohnt, in einer verstärkten antimikrobiellen Wirkung nieder. Hierdurch kann man den beschriebenen Nachteil der leichten Verkeimbarkeit großer Oberflächen in einen Produktnutzen umkehren, da sich durch eine antimikrobielle Ausrüstung dieser vergrößerten Oberflächen mittels antimikrobieller geschäumter Substrate effiziente Luftreingungssysteme kreiren lassen. Je nach Art der verwendeten Schaumstoffe lassen sich durch eine derartige Vorgehensweise natürlich auch flüssigkeitsbasierende Durchflußsysteme in mikrobiologischer Hinsicht aufwerten.

Die erfindungsgemäßen Schaumstoffe lassen sich prinzipiell zu allen Produkten weiterverarbeiten, die auch bisher auf unmodifizierten geschäumten Substraten und Schaumstoffen basieren. Bei diesen Produkten kann es sich z.B. um Filtermatten, Dämmmatten- und Materialien, Verpackungsmaterialien, Teppichrücken, Matratzen, Sitz- und Polsterbezüge und Bauteile von Klimanlagen handeln.

Weitere Gegenstände der Erfindung sind Verfahren zur Herstellung antimikrobieller Schaumstoffe.

In einer Ausführungsform kann dies durch Einbringen der genannten Aminoalkohole in eine Monomerenmischung erfolgen, die polymerisiert und anschließend oder gleichzeitig aufgeschäumt wird. In einer anderen Ausführungsform kann dies durch Einbringen der genannten Aminoalkohole z. B. in eine Polymermischung bzw. Polymerlösung erfolgen, die anschließend oder gleichzeitig mit einem inerten Gas aufgeschäumt wird.

In einer weiteren Ausführungsform zur Herstellung von antimikrobieller Schaumstoffe kann ein bereits hergestellter, vorzugsweise nicht-antimikrobieller Schaumstoff nachträglich antimikrobiell ausgerüstet werden, indem dieser Schaumstoff mit den genannten Aminoalkoholen umgesetzt wird.

Die geschäumten oder nicht geschäumten Polymere bzw. die in das Verfahren eingesetzten Monomermischungen können die folgenden Zusammensetzungen bzw. Eigenschaften aufweisen:
- Monomere oder geschäumte Polymere mit funktionellen Gruppen wie Hydroxy-, Carbonsäure, Sulfonsäure, Amino-, Ester-, Ether-, Amid-Gruppen
- ein oder mehrere radikalisch polymerisierbare, olefinisch ungesättigte Monomere,
- Bevorzugte radikalisch polymerisierbare Monomere sind: Vinylderivate, Styrolverbindungen, Allylderivate, Olefine, Acrylsäure- und Methacrylsäureverbindungen, Methylmethacrylat, Methylacrylat, Methacrylsäure-tert.-butylester, Acrylsäure-tert.-butylester, Methacrylsäurebutylester, Acrylsäurebutylester, Ethylmethacrylat, Ethylacrylat, Methacrylsäurepropylester, Methacrylsäureisopropylester, Acrylsäurepropylester und/oder Acrylsäureisopropylester.
- ein oder mehrere polykondensierbare Monomere
- Bevorzugt polykondensierbbare Monomere sind: Diole, Diisocyanate, Disäure oder Epoxyde.

Bevorzugt werden als Alkohole der Formel (I) tert-Butylaminoethanol, tert.-Butylaminomethanol, tert.-Butylaminopropanol, 2-Butylaminoethanol, 2-Butylaminomethanol, 2-Butylaminopropanol, 2-Diethylaminoethanol, 2-Diethylaminomethanol, 2-Diethylaminopropanol, 2-Dimethylaminoethanol, 2-Dimethylaminomethanol, 2-Dimethylaminopropanol, Aminoethanol, Aminomethanol, Aminopropanol und/oder Aminobutanol eingesetzt.

Ein Verfahren der Erfindung kann sich derart gestalten, dass der Aminoalkohol unmittelbar oder als Teil einer Lösung, z.B. in einem organischen Lösemittel wie Ethanol, auf ein geschäumtes Substrat aufgebracht wird. Dies geschieht z.B. durch Eintauchen des geschäumten Substrates in eine Lösung des Aminoalkohols oder aber durch ein Aufstreichen oder Aufsprühen der genannten Lösung des Aminoalkohols auf ein geschäumtes Substrat.

Es wird vermutet, dass der Aminoalkohol im Verlauf des Imprägnierprozesses, welcher im Allgemeinen durch begleitende Anwendung von thermischer Energie noch effizienter durchgerührt werden kann, auf die Oberfläche des geschäumten Substrates aufzieht und dort physikalisch, durch Physisorption, welche durch die große Oberfläche von Schaumstoffen stark begünstigt wird, oder chemisch, durch Reaktion mit geeigneten funktionellen Gruppen des Substrates, gebunden wird. Als chemische Kopplungsreaktionen kommen dabei prinzipiell alle Reaktionstypen der organischen Chemie in Betracht, welche mit Hydroxy- oder Aminogruppen unter Ausbildung chemischer Verbindungen reagieren, z. B. Veresterung oder Veretherung.

Bevorzugt wird die Umsetzung thermisch (z.B. bei 20 bis 200 °C) oder strahlenchemisch induziert. Es ist auch möglich, die Schaumstoffe vor der Umsetzung mit den Aminoalkoholen mit Plasmaverfahren, Reaktion mit Mineralsäuren oder starken Basen, elektromagnetischer Strahlung, insbesondere UV-Strahlung, Beflammung oder Coronabehandlung zu aktivieren.

In einer anderen Ausführungsform werden ein oder mehrere Polymere mit mindestens einem Aminoakohol der Formel I 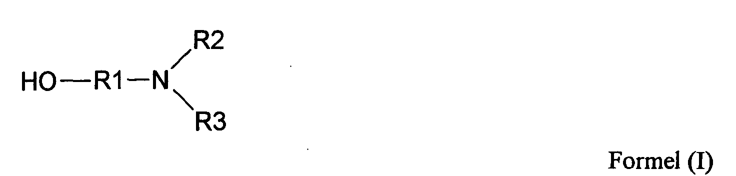 mit
R1 = verzweigter oder unverzweigter aliphatischer oder aromatischer Kohlenwasserstoffrest mit 1 bis 15 Kohlenstoffatomen,
R2 = H, verzweigter oder unverzweigter aliphatischer oder aromatischer Kohlenwasserstoffrest mit 1 bis 15 Kohlenstoffatomen,
R3 = H, verzweigter oder unverzweigter aliphatischer oder aromatischer Kohlenwasserstoffrest mit 1 bis 15 Kohlenstoffatomen
versetzt und mit einem inerten Gas aufgeschäumt.

Die Aminoalkohlle werden bevorzugt zu einer Lösung oder einer Schmelze der Polymeren zugegeben. Als Lösungsmittel können inerte Flüssigkeiten wie n-Pentan verwendet werden, die durch Verdampfen ein Aufschäumen des Polymers bewirken.

Die weitere Ausführungsform des Verfahrens der Erfindung gestaltet sich derart, dass einer Reaktionslösung, welche zumindest ein Monomer enthält, aus dem der nachfolgende Schaumstoff hergestellt werden soll, ein Aminoalkohol zugegeben wird. Im Anschluß daran oder gleichzeitig mit dem Schäumungsprozesses findet eine Umsetzung des Aminoalkohols mit dem Polymer statt. Diese Umsetzung wird im Allgemeinen durch Wärmezufuhr und/oder den Zusatz niedrig siedender organischer Stoffe, insbesondere Lösemitteln, wie z. B. Pentan, oder chemisch inerten Gasen, wie z. B. Stickstoff oder Kohlendioxid, ausgelöst.

Es wird vermutet, dass der Aminoalkohol im Verlauf der Reaktion entweder in das entstehende polymere Netzwerk eingebaut oder aber bei Anwesenheit geeigneter Reaktionspartner über seine Hydroxy- oder Aminofunktion an das polymere Geflecht des Schaumstoffes fixiert wird. Als Kopplungsreaktionen kommen dabei prinzipiell alle Reaktionstypen der organischen Chemie in Betracht, welche mit Hydroxy- oder Aminogruppen unter Ausbildung chemischer Verbindungen reagieren, z. B. Veresterung oder Veretherung. Daneben stellen durch die große Oberfläche der Schaumstoffe bedingt auch rein physisch bedingte Kopplungsmechanismen, wie z.B die Physisorption, eine entscheidende Rolle.

### Verwendung der Verbindungen bzw. Polymer-Formulierungen

Weitere Gegenstände der vorliegenden Erfindung sind die Verwendung der erfindungsgemäß hergestellten antimikrobiellen Schaumstoffe zur Herstellung von antimikrobiell wirksamen Erzeugnissen und die so hergestellten Erzeugnisse als solche. Solche Erzeugnisse basieren vorzugsweise auf Polyisoprenen, Polydienen, Polyamiden, Polyurethanen, Polystyrolen, Polyetherblockamiden, Polyesteramiden, Polyesterimiden, PVC, Polyolefinen, Silikonen, Polysiloxanen, Polymethacrylat oder Polyterephthalaten, Metallen, Gläsern, Hölzern und Keramiken, die mit erfindungsgemäßen Verbindungen bzw. Polymer-Formulierungen beschichtete Oberflächen aufweisen.

Antimikrobiell wirksame Erzeugnisse dieser Art sind beispielsweise und insbesondere Filtermatten, Dämmmatten- und Materialien, Verpackungsmaterialien, Teppichrücken, Matratzen, Sitz- und Polsterbezüge und Bauteile von Klimanlagen.

Die Verbindungen können überall verwendet werden, wo es auf möglichst bakterienfreie, algen- und pilzfreie, d. h. mikrobizide Oberflächen oder Oberflächen mit Antihafteigenschaften ankommt.

Weiterhin finden die erfindungsgemäßen Schaumstoffe als Biofoulinginhibitor für Wasser, insbesondere in Kühlkreisläufen, Verwendung. Zur Vermeidung von Schäden an Kühlkreisläufen durch Algen- oder Bakterienbefall müssen diese häufig gereinigt bzw. entsprechend überdimensioniert gebaut werden. Die Zugabe von mikrobiziden Substanzen wie Formalin ist bei offenen Kühlsystemen, wie sie bei Kraftwerken oder chemischen Anlagen üblich sind, nicht möglich.

Andere mikrobizide Substanzen sind oft stark korrosiv oder schaumbildend, was einen Einsatz in solchen Systemen verhindert.

Dagegen ist möglich, erfindungsgemäße Schaumstoffe oder deren Blends mit weiteren Polymeren in zerkleinerter Form in das Brauchwasser einzuspeisen. Die Bakterien werden an diesen antimikrobiellen Erzeugnissen, welche bedingt durch die Schaumstoffstruktur eine sehr hohe aktive Oberfläche besitzen, wirksam abgetötet und können problemlos durch Abfiltrieren aus dem System entfernt. Eine Ablagerung von Bakterien oder Algen an Anlagenteilen kann so effizient verhindert werden.

Ein weiterer Gegenstand der vorliegenden Erfindung ist ein Verfahren zur Entkeimung von Wasser, insbesondere Kühlwasserströmen, bei dem Wasser (Kühlwasser) antimikrobielle Schaumstoffe zugesetzt werden.

Bevorzugt werden die Schaumstoffe im Wasser dispergiert, d. h. in zerkleinerter Form zugesetzt.

Die zerkleinerte Form der Schaumstoffe kann durch bekannte physikalische Prozesse, wie mechanisches Schneiden oder Thermoschneiden, erhalten werden. Bevorzugt werden die so zugeschnittenen erfindungsgemäßen Schaumstoffe in einer Größenverteilung von 0,1 bis 5 mm (als Kugeldurchmesser) eingesetzt, so dass einerseits eine große Oberfläche zur Abtötung der Bakterien oder Algen zur Verfügung steht, andererseits da wo erforderlich, die Abtrennung vom Wasser bzw. Kühlwasser z. B. durch Filtrieren einfach möglich ist. Das Verfahren kann z. B. so ausgeübt werden, das kontinuierlich ein Teil (5 bis 10 %) der eingesetzten Schaumstofferzeugnisse aus dem System entfernt und durch eine entsprechende Menge an frischem Material ersetzt wird. Alternativ kann unter Kontrolle der Keimzahl des Wassers bei Bedarf weitere antimikrobielle Schaumstoffe zugegeben werden. Als Einsatzmenge genügen - je nach Wasserqualität - 0,1 bis 100 g antimikrobielle Schaumstofferzeugnisse pro m³ Kühlwasser.

Zur weiteren Beschreibung der vorliegenden Erfindung werden die folgenden Beispiele gegeben, die die Erfindung weiter erläutern, nicht aber ihren Umfang begrenzen sollen, wie er in den Patentansprüchen dargelegt ist.

### Beispiel 1:

2 g 2-tert.-Butylaminoethanol (Fa. Aldrich) werden in 10 mL Ethanol gelöst. In diese Mischung wird ein Polyurethanschaumstoff mit einer Dicke von 2 cm und einem Durchmesser von 4 cm für die Dauer von 10 Sekunden getaucht. Im Anschluß wird der so behandelte Schaumstoff für die Dauer von 8 Stunden bei 35 ° C getrocknet.

### Beispiel 1a:

Das beschichtete Schaumstoffstück aus Beispiel 1 wird auf dem Boden eines Becherglases fixiert, das 20 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 1b:

Das beschichtete Schaumstoffstück aus Beispiel 1 wird auf dem Boden eines Becherglases fixiert, das 20 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 1c:

Je ein beschichtetes Schaumstoffstück aus Beispiel 1 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben ist bei keinem der beschichteten Schaumstoffstücke ein Bewuchs feststellbar.

### Beispiel 2:

0,2 g 3-Aminopropanol (Fa. Aldrich) werden in 10 mL Ethanol gelöst. In diese Mischung wird ein Polyurethanschaumstoff mit einer Dicke von 2 cm und einem Durchmesser von 4 cm für die Dauer von 10 Sekunden getaucht. Im Anschluß wird der so behandelte Schaumstoff für die Dauer von 8 Stunden bei 35 °C getrocknet.

### Beispiel 2a:

Das beschichtete Schaumstoffstück aus Beispiel 2 wird auf dem Boden eines Becherglases fixiert, das 20 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 2b:

Das beschichtete Schaumstoffstück aus Beispiel 2 wird auf dem Boden eines Becherglases fixiert, das 20 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 2c:

Je ein beschichtetes Schaumstoffstück aus Beispiel 2 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben ist bei keinem der beschichteten Schaumstoffstücke ein Bewuchs feststellbar.

### Beispiel 3:

2 g 2-Butylaminoethanol (Fa. Aldrich) werden in 10 mL Ethanol gelöst. In diese Mischung wird ein Polyurethanschaumstoff mit einer Dicke von 2 cm und einem Durchmesser von 4 cm für die Dauer von 10 Sekunden getaucht. Im Anschluß wird der so behandelte Schaumstoff für die Dauer von 8 Stunden bei 35 °C getrocknet.

### Beispiel 3a:

Das beschichtete Schaumstoffstück aus Beispiel 3 wird auf dem Boden eines Becherglases fixiert, das 20 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 3b:

Das beschichtete Schaumstoffstück aus Beispiel 3 wird auf dem Boden eines Becherglases fixiert, das 20 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 3c:

Je ein beschichtetes Schaumstoffstück aus Beispiel 3 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben ist bei keinem der beschichteten Schaumstoffstücke ein Bewuchs feststellbar.

### Beispiel 4:

0,2 g 2-tert.-Butylaminoethanol (Fa. Aldrich) und 2 g Polystyrol (Fa. Aldrich) werden in 10 mL n-Pentan gelöst. Diese Mischung wird in einen 250 mL Dreihalskolben gegeben, der anschließend auf 80° C erhitzt wird. Das n-Pentan siedet während dieses Prozesses und schäumt das entstehende antimikrobielle Polystyrol auf. Nach Ablauf von 2 Stunden läßt man den Kolben auf Raumtemperatur abkühlen und entnimmt das geschäumte Produkt.

### Beispiel 4a:

2 g des Produktes aus Beispiel 4 werden in ein Teesieb gegeben, welches verschlossen in 20 ml einer Testkeimsuspension von Pseudomonas aeruginosa eingelegt wird. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 4b:

2 g des Produktes aus Beispiel 4 werden in ein Teesieb gegeben, welches verschlossen in 20 ml einer Testkeimsuspension von Staphylococcus aureus eingelegt wird. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 4c:

Jeweils 2 g des Produktes aus Beispiel 4 werden in fünf verschiedene Petrischalen gegeben. Je eine dieser Schalen wird mit Chlorella sp., Trentepohlia sp., Gloeocapsa sp. Calothrix sp. und Aspergilus niger beimpft. Die Proben werden im Anschluß für 3 Wochen in einen Brutschrank verbracht. Im Gegensatz zu mitlaufenden Kontrollproben ist auf keinem der Probestücke ein Bewuchs feststellbar.

### Beispiel 5:

0,2 g 2-Butylaminoethanol (Fa. Aldrich) und 2 g Polystyrol (Fa. Aldrich) werden in 10 mL n-Pentan gelöst. Diese Mischung wird in einen 250 mL Dreihalskolben gegeben, der anschließend auf 80 °C erhitzt wird. Das n-Pentan siedet während dieses Prozesses und schäumt das entstehende antimikrobielle Polystyrol auf. Nach Ablauf von 2 Stunden läßt man den Kolben auf Raumtemperatur abkühlen und entnimmt das geschäumte Produkt.

### Beispiel 5a:

2 g des Produktes aus Beispiel 5 werden in ein Teesieb gegeben, welches verschlossen in 20 ml einer Testkeimsuspension von Pseudomonas aeruginosa eingelegt wird. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 5b:

2 g des Produktes aus Beispiel 5 werden in ein Teesieb gegeben, welches verschlossen in 20 ml einer Testkeimsuspension von Staphylococcus aureus eingelegt wird. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 5c:

Jeweils 2 g des Produktes aus Beispiel 5 werden in fünf verschiedene Petrischalen gegeben. Je eine dieser Schalen wird mit Chlorella sp., Trentepohlia sp., Gloeocapsa sp. Calothrix sp. und Aspergilus niger beimpft. Die Proben werden im Anschluß für 3 Wochen in einen Brutschrank verbracht. Im Gegensatz zu mitlaufenden Kontrollproben ist auf keinem der Probestücke ein Bewuchs feststellbar.

### Beispiel 6:

0,2 g 3-Aminopropanol (Fa. Aldrich) und 2 g Polystyrol (Fa. Aldrich) werden in 10 mL n-Pentan gelöst. Diese Mischung wird in einen 250 mL Dreihalskolben gegeben, der anschließend auf 80° C erhitzt wird. Das n-Pentan siedet während dieses Prozesses und schäumt das entstehende antimikrobielle Polystyrol auf. Nach Ablauf von 2 Stunden läßt man den Kolben auf Raumtemperatur abkühlen und entnimmt das geschäumte Produkt.

### Beispiel 6a:

2 g des Produktes aus Beispiel 6 werden in ein Teesieb gegeben, welches verschlossen in 20 ml einer Testkeimsuspension von Pseudomonas aeruginosa eingelegt wird. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 6b:

2 g des Produktes aus Beispiel 6 werden in ein Teesieb gegeben, welches verschlossen in 20 ml einer Testkeimsuspension von Staphylococcus aureus eingelegt wird. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 6c:

Jeweils 2 g des Produktes aus Beispiel 6 werden in fünf verschiedene Petrischalen gegeben. Je eine dieser Schalen wird mit Chlorella sp., Trentepohlia sp., Gloeocapsa sp. Calothrix sp. und Aspergilus niger beimpft. Die Proben werden im Anschluß für 3 Wochen in einen Brutschrank verbracht. Im Gegensatz zu mitlaufenden Kontrollproben ist auf keinem der Probestücke ein Bewuchs feststellbar.

## Patentansprüche

1. Antimikrobielle Schaumstoffe, enthaltend ein oder mehrere geschäumte Polymere sowie mindestens einen Aminoalkohol der Formel I 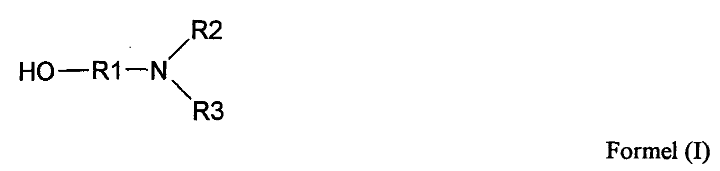 mit
R1 = verzweigter oder unverzweigter aliphatischer oder aromatischer Kohlenwasserstoffrest mit 1 bis 15 Kohlenstoffatomen.
R2 = H, verzweigter oder unverzweigter aliphatischer oder aromatischer Kohlenwasserstoffrest mit 1 bis 15 Kohlenstoffatomen.
R3 = H, verzweigter oder unverzweigter aliphatischer oder aromatischer Kohlenwasserstoffrest mit 1 bis 15 Kohlenstoffatomen.

2. Antimikrobielle Schaumstoffe nach Anspruch 1,
**dadurch gekennzeichnet,**
**dass** die geschäumten Polymere aus radikalisch polymerisierbaren, olefinisch ungesättigten Monomeren, hergestellt werden.

3. Antimikrobielle Schaumstoffe nach Anspruch 1 oder 2,
**dadurch gekennzeichnet,**
**dass** die geschäumten Polymere Hydroxy-, Carbonsäure, Sulfonsäure, Amino-, Ester-, Ether-, Amid- als funktionelle Gruppen enthalten.

4. Antimikrobielle Schaumstoffe nach Anspruch 2,
**dadurch gekennzeichnet,**
**dass** die olefinisch ungesättigten Monomere Vinylderivate, Styrolverbindungen, Allylderivate, Olefine, Acrylsäure- und Methacrylsäureverbindungen, Methylmethacrylat, Methylacrylat, Methacrylsäure-tert.-butylester, Acrylsäure-tert.-butylester, Methacrylsäurebutylester, Acrylsäurebutylester, Ethylmethacrylat, Ethylacrylat, Methacrylsäurepropylester, Methacrylsäureisopropylester, Acrylsäurepropylester und/oder Acrylsäureisopropylester sind.

5. Antimikrobielle Schaumstoffe nach Anspruch 1,
**dadurch gekennzeichnet,**
**dass** die geschäumten Polymere aus polykondensierbaren Monomeren hergestellt werden.

6. Antimikrobielle Schaumstoffe nach Anspruch 5,
**dadurch gekennzeichnet,**
**dass** die polykondensierbaren Monomere Diole, Diisocyanate, Disäure oder Epoxyde sind.

7. Antimikrobielle Schaumstoffe nach einem der Ansprüche 1 bis 6,
**dadurch gekennzeichnet,**
**dass** als Alkohole der Formel (I) tert.-Butylaminoethanol, tert.-Butylaminomethanol, tert.-Butylaminopropanol, 2-Butylaminoethanol, 2-Butylaminomethanol, 2-Butylaminopropanol, 2-Diethylaminoethanol, 2-Diethylaminomethanol, 2-Diethylaminopropanol, 2-Dimethylaminoethanol, 2-Dimethylaminomethanol, 2-Dimethylaminopropanol, Aminoethanol, Aminomethanol, Aminopropanol und/oder Aminobutanol eingesetzt werden.

8. Antimikrobielle Schaumstoffe nach einem der Ansprüche 1 bis 7,
**dadurch gekennzeichnet,**
**dass** die antimikrobiellen Schaumstoffe 0,1 bis 75 Gew.% eines Aminoalkohols enthalten.

9. Verfahren zur Herstellung antimikrobieller Schaumstoffe,
**dadurch gekennzeichnet,**
**dass** mindestens ein Aminoalkohol der Formel I 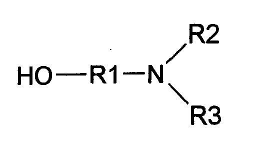 mit
R1 = verzweigter oder unverzweigter aliphatischer oder aromatischer Kohlenwasserstoffrest mit 1 bis 15 Kohlenstoffatomen.
R2 = H, verzweigter oder unverzweigter aliphatischer oder aromatischer Kohlenwasserstoffrest mit 1 bis 15 Kohlenstoffatomen.
R3 = H, verzweigter oder unverzweigter aliphatischer oder aromatischer Kohlenwasserstoffrest mit 1 bis 15 Kohlenstoffatomen
in eine Monomerenmischung eingebracht, diese polymerisiert und anschließend oder gleichzeitig aufgeschäumt wird.

10. Verfahren nach Anspruch 9,
**dadurch gekennzeichnet,**
**dass** die Monomerenmischung aus einem oder mehreren radikalisch polymerisierbaren, olefinisch ungesättigten Monomeren besteht.

11. Verfahren nach Anspruch 9 oder 10,
**dadurch gekennzeichnet,**
**dass** die Monomeren Hydroxy-, Carbonsäure, Sulfonsäure, Amino-, Ester-, Ether-, Amidals funktionelle Gruppen enthalten.

12. Verfahren nach einem der Ansprüche 10 oder 11,
**dadurch gekennzeichnet,**
**dass** die olefinisch ungesättigten Monomere Vinylderivate, Styrolverbindungen, Allylderivate, Olefine, Acrylsäure- und Methacrylsäureverbindungen, Methylmethacrylat, Methylacrylat, Methacrylsäure-tert.-butylester, Acrylsäure-tert.-butylester, Methacrylsäurebutylester, Acrylsäurebutylester, Ethylmethacrylat, Ethylacrylat, Methacrylsäurepropylester, Methacrylsäureisopropylester, Acrylsäurepropylester und/oder Acrylsäureisopropylester sind.

13. Verfahren nach Anspruch 9,
**dadurch gekennzeichnet,**
**dass** die Monomerenmischung aus einem oder mehreren polykondensierbaren Monomeren besteht.

14. Verfahren nach Anspruch 13,
**dadurch gekennzeichnet,**
**dass** die polykondensierbaren Monomere Diole, Diisocyanate, Disäure oder Epoxyde sind.

15. Verfahren zur antimikrobiellen Ausrüstung von Schaumstoffen,
**dadurch gekennzeichnet,**
**dass** Schaumstoffe mit mindestens einem Aminoalkohol der Formel I 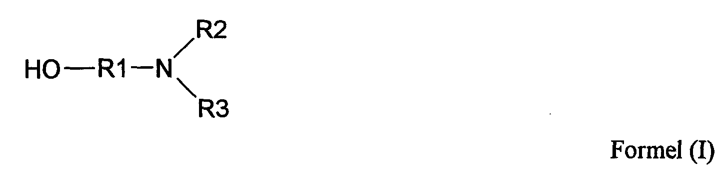 mit
R1 = verzweigter oder unverzweigter aliphatischer oder aromatischer Kohlenwasserstoffrest mit 1 bis 15 Kohlenstoffatomen.
R2 = H, verzweigter oder unverzweigter aliphatischer oder aromatischer Kohlenwasserstoffrest mit 1 bis 15 Kohlenstoffatomen.
R3 = H, verzweigter oder unverzweigter aliphatischer oder aromatischer Kohlenwasserstoffrest mit 1 bis 15 Kohlenstoffatomen
umgesetzt werden.

16. Verfahren nach Anspruch 15,
**dadurch gekennzeichnet,**
**dass** die Schaumstoffe Hydroxy-, Carbonsäure, Sulfonsäure, Amino-, Ester-, Ether-, Amid-Gruppen als funktionelle Gruppen enthalten.

17. Verfahren nach einem der Ansprüche 15 oder 16,
**dadurch gekennzeichnet,**
**dass** die Umsetzung thermisch oder strahlenchemisch induziert wird.

18. Verfahren nach Anspruch 17,
**dadurch gekennzeichnet,**
**dass** die thermisch induzierte Umsetzung bei 20 bis 200 °C durchgeführt wird.

19. Verfahren nach einem der Ansprüche 15 bis 18,
**dadurch gekennzeichnet,**
**dass** die Schaumstoffe vor der Umsetzung mit den Aminoalkoholen mit Plasmaverfahren, Reaktion mit Mineralsäuren oder starken Basen, elektromagnetischer Strahlung, insbesondere UV-Strahlung, Beflammung oder Coronabehandlung aktiviert werden.

20. Verfahren zur Herstellung antimikrobieller Schaumstoffe,
**dadurch gekennzeichnet,**
**dass** ein oder mehrere Polymere mit mindestens einem Aminoakohol der Formel I 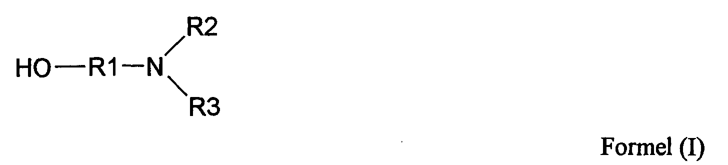 mit
R1 = verzweigter oder unverzweigter aliphatischer oder aromatischer Kohlenwasserstoffrest mit 1 bis 15 Kohlenstoffatomen.
R2 = H, verzweigter oder unverzweigter aliphatischer oder aromatischer Kohlenwasserstoffrest mit 1 bis 15 Kohlenstoffatomen.
R3 = H, verzweigter oder unverzweigter aliphatischer oder aromatischer Kohlenwasserstoffrest mit 1 bis 15 Kohlenstoffatomen
versetzt und mit einem inerten Gas aufgeschäumt wird.

21. Verfahren nach Anspruch 20,
**dadurch gekennzeichnet,**
**dass** der oder die Aminoalkohol(e) zu einer Lösung oder Schmelze der Polymeren zugegeben wird.

22. Verfahren nach einem der Ansprüche 20 oder 21,
**dadurch gekennzeichnet,**
**dass** die Polymeren in einer inerten Flüssigkeit gelöst und durch Verdampfen der Flüssigkeit aufgeschäumt werden.

23. Verfahren nach einem der Ansprüche 9 bis 14, 15 bis 19 oder 20 bis 22,
**dadurch gekennzeichnet,**
**dass** als Aminoalkohole der Formel (I) tert.-Butylaminoethanol, tert.-Butylaminomethanol, tert.-Butylaminopropanol, 2-Butylaminoethanol, 2-Butylaminomethanol, 2-Butylaminopropanol, 2-Diethylaminoethanol, 2-Diethylaminomethanol, 2-Diethylaminopropanol, 2-Dimethylaminoethanol, 2-Dimethylaminomethanol, 2-Dimethylaminopropanol, Aminoethanol, Aminomethanol, Aminopropanol und/oder Aminobutanol eingesetzt werden.

24. Verfahren nach einem der Ansprüche 9 bis 14, 15 bis 19 oder 20 bis 22,
**dadurch gekennzeichnet,**
**dass** die Schaumstoffe 0,1 bis 75 Gew.% mindestens eines Aminoalkohols enthalten.

25. Verwendung der antimikrobiellen Schaumstoffe gemäß einem der Ansprüche 1 bis 8 zur Herstellung von Erzeugnissen mit einer antimikrobiellen Beschichtung.

26. Verwendung der antimikrobiellen Schaumstoffe gemäß einem der Ansprüche 1 bis 8 in Dämmmaterialien, Polstern, Matratzen und Filtermatten.

27. Verfahren zur Entkeimung von Wasser,
**dadurch gekennzeichnet,**
**dass** dem Wasser antimikrobielle Schaumstoffe gemäß einem der Ansprüche 1 bis 8 zugesetzt werden.
